Europäisches Patentamt

European Patent Office

Office européen des brevets

(19)

(11) Numéro de publication: **0 176 384**
B1

(12) FASCICULE DE BREVET EUROPEEN

(45) Date de publication du fascicule du brevet:
17.05.89

(51) Int. Cl.⁴: **G02F 1/133**, G09G 3/36

(21) Numéro de dépôt: 85401615.1

(22) Date de dépôt: 07.08.85

(54) Ecran matriciel polychrome sans couplage entre les lignes et les colonnes.

(30) Priorité: 16.08.84 FR 8412837

(43) Date de publication de la demande:
02.04.86 Bulletin 86/14

(45) Mention de la délivrance du brevet:
17.05.89 Bulletin 89/20

(84) Etats contractants désignés:
CH DE GB IT LI NL

(56) Documents cités:
EP-A- 0 123 568
DE-A- 3 234 110
FR-A- 2 451 082
FR-A- 2 499 741
GB-A- 2 025 676

PATENTS ABSTRACTS OF JAPAN, vol. 7, no. 90 (P-191)
[1235], 14 avril 1983 & JP - A - 58 17 420

(73) Titulaire: **COMMISSARIAT A L'ENERGIE ATOMIQUE,
31/33, rue de la Fédération, F-75015 Paris(FR)**

(72) Inventeur: **Clerc, Jean-Frédéric, 10, Allée du Pré Blanc,
F-38240 Meylan(FR)**
Inventeur: **Renard, Stéphane, 2, Boulevard Clémenceau,
F-38100 Grenoble(FR)**

(74) Mandataire: **Mongrédien, André et al, c/o
BREVATOME 25, rue de Ponthieu, F-75008 Paris(FR)**

EP 0 176 384 B1

**Description**

La présente invention a pour objet un écran matriciel polychrome sans couplage entre les lignes et les colonnes de commande. Elle trouve une application en opto-électronique, dans la réalisation d'afficheurs polychromes à cristaux liquides utilisés notamment comme convertisseurs d'informations électriques en informations optiques.

Les écrans matriciels, monochromes et polychromes, comprennent de façon connue une cellule d'affichage constituée par deux parois isolantes transparentes et par un matériau comprenant une pluralité de zones réparties en matrice et intercalées entre une première famille d'électrodes recouvrant l'une des deux parois et définissant p lignes de commande et une seconde famille d'électrodes recouvrant l'autre paroi, constituée de bandes conductrices parallèles et définissant q colonnes de commande, la ligne i, où i est un entier tel que $1 \leq i \leq p$, et la colonne j, où j est un entier tel que $1 \leq j \leq q$, définissant une desdites zones du matériau et comprenant des moyens permettant de délivrer sur les lignes et les colonnes des signaux d'excitation appropriés servant à exciter une propriété optique du matériau.

On connaît de nombreux dispositifs de ce genre pour lesquels l'excitation est électrique et qui utilisent par exemple comme matériau sensible, un film de cristal liquide. L'invention s'applique particulièrement bien à de tels dispositifs, mais elle s'applique de manière plus générale à tous les dispositifs comprenant un matériau dont une propriété optique peut être modifiée à l'aide d'une excitation électrique. Le matériau peut être un corps solide ou liquide, amorphe ou cristallin. La propriété optique peut être une opacité, un indice de réfraction, une transparence, une absorption, une diffusion, une diffraction, une convergence, un pouvoir rotatoire, une biréfringence, une intensité réfléchie dans un angle solide déterminé, etc...

Dans les écrans matriciels polychromes, chaque point d'image élémentaire est constitué de plusieurs des zones définies par l'intersection d'électrodes, par exemple trois zones alignées, recouvertes chacune d'un filtre coloré, par exemple respectivement rouge, vert et bleu. En chacun de ces points d'image, l'intensité de chacune de ces couleurs peut être commandée indépendamment, ce qui permet d'obtenir, par combinaison, toutes les nuances du spectre visible.

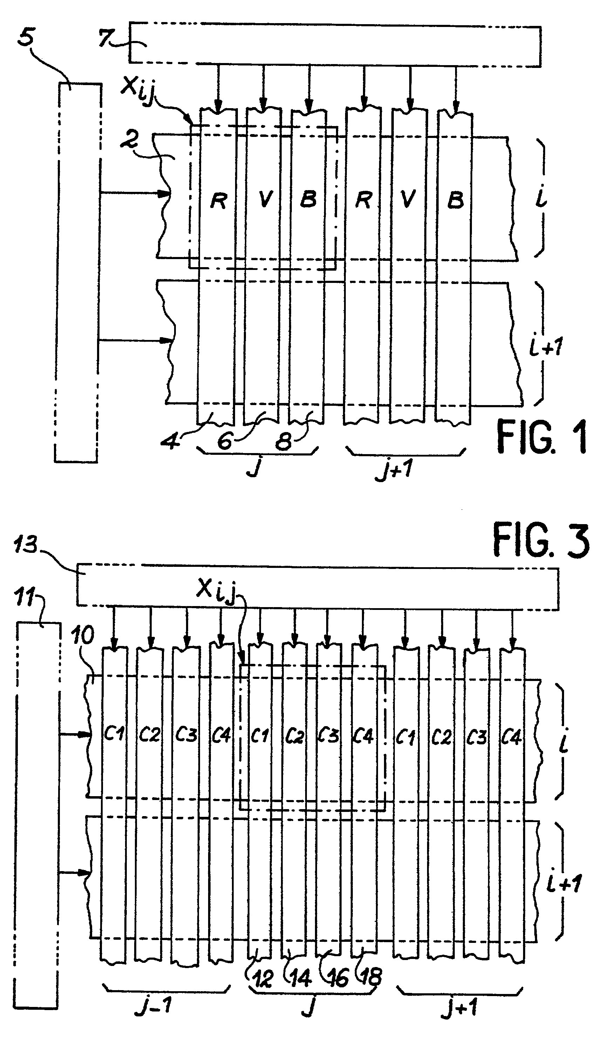

A titre d'exemple, la figure 1 représente la structure d'un écran matriciel trichrome de type connu. Dans cet écran, chaque point d'image $X_{ij}$ est défini par l'intersection de la ligne de commande d'indice i, constituée d'une unique électrode 2, et de la colonne de commande j constituée de trois électrodes 4,6, 8. Ces électrodes sont transparentes et sont recouvertes chacune d'un filtre coloré, qui, sur la figure, sont respectivement rouge, vert et bleu pour les électrodes 4, 6 et 8.

Un procédé de commande connu d'un tel écran matriciel consiste, par exemple dans le cas d'une cellule à cristaux liquides où l'excitation est de nature électrique, à appliquer sur la ligne d'indice i une tension $V_{xi}$ périodique, de valeur moyenne nulle et sur les autres lignes une tension nulle, et à appliquer simultanément sur chaque électrode de chaque colonne de commande des tensions périodiques de valeur moyenne nulle, de même durée et de même fréquence que la tension de ligne $V_{xi}$, mais qui sont déphasées par rapport à celle-ci d'une quantité $\phi_{ij}$. Ces signaux de tension sont appliqués par un moyen de commande de ligne 5 pour les électrodes de ligne, et par un moyen de commande de colonne 7 pour les électrodes de colonne.

La transmission optique est maximale lorsque cette phase est de 180° et cette transmission est nulle (extinction) lorsque cette phase est de 0°. Entre ces deux valeurs, la transmission est atténuée, l'extinction étant d'autant plus importante que la phase est proche de 0°.

Avec cette structure et ce procédé de commande, un fond uni, par exemple rouge, est obtenu de la manière suivante. Sur chaque électrode rouge, i.e. chaque électrode de colonne recouverte d'un filtre rouge, telle que l'électrode 4, on applique, par le moyen de commande de colonne 7, un signal de tension présentant un déphasage de 180° par rapport au signal de ligne délivré par le moyen de commande de ligne 5, et on applique sur les électrodes verte et bleue, par le moyen de commande de colonne 7, un signal de tension en phase avec le signal de ligne.

Dans le cas de l'affichage d'un fond uni, une majorité des électrodes de colonne sont donc adressées avec un déphasage déterminé. Cette configuration conduit à un couplage entre les lignes et les colonnes qui affectent la qualité visuelle de l'image affichée.

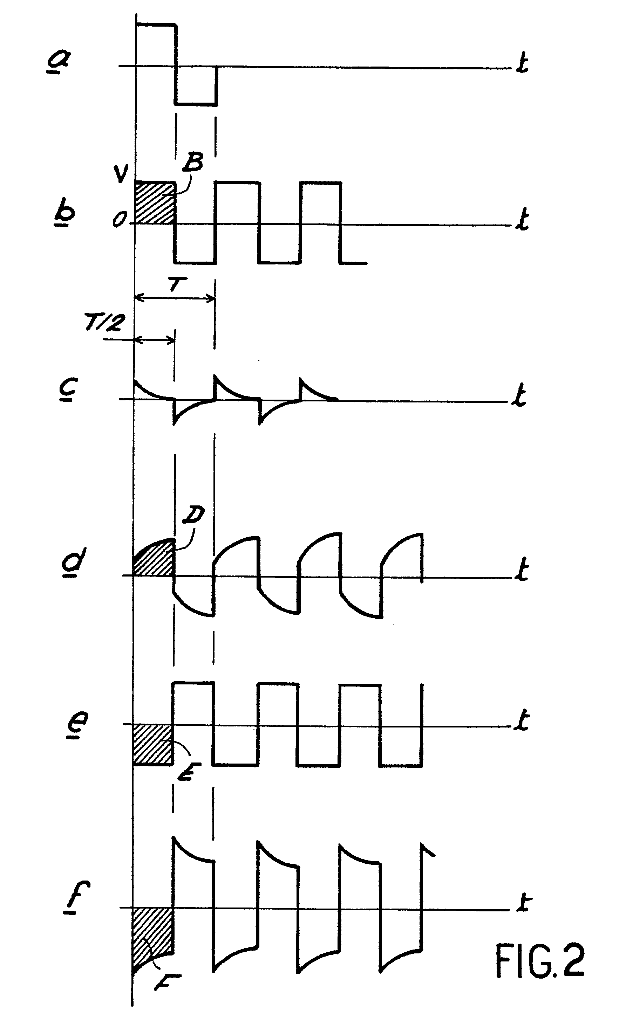

On va maintenant expliquer l'origine du phénomène de couplage en référence à la figure 2 sur laquelle on a représenté des signaux appliqués sur les électrodes de ligne et de colonne ainsi que les signaux parasites engendrés. Selon le procédé de commande classique, toutes les électrodes de ligne sont reliées à la masse sauf l'électrode d'indice i où $1 \leq i \leq p$, à laquelle on applique un créneau de tension tel que le signal $\underline{a}$ de la figure 2. On applique par ailleurs simultanément sur chaque électrode de colonne une tension périodique. La différence de phase entre le signal de ligne $\underline{a}$ appliqué sur l'électrode d'indice i et le signal appliqué sur une électrode de colonne détermine le facteur de transmission optique du volume de cristal liquide situé au droit de l'intersection de ladite électrode de ligne et de ladite électrode de colonne.

Ce déphasage est quelconque. Toutefois, pour simplifier l'explication du phénomène de couplage, on supposera dans la suite du texte que tous les signaux appliqués sur les électrodes de colonne sont soit en phase, soit en opposition de phase avec le signal de ligne $\underline{a}$. Ces signaux portent respectivement les références $\underline{b}$ et $\underline{e}$ sur la figure 2.

Par effet capacitif, il apparaît sur les électrodes de ligne reliées à la masse un signal de tension parasite tel que le signal $c$. L'origine de ce signal parasite est la suivante. A une date t comprise entre 0 et

$$\frac{T}{2},$$

où T est la période des signaux de tension appliqués sur les électrodes, les tensions sur les électrodes sont constantes et égales à +V ou -V. Sur une électrode de colonne soumise à une tension +V, il apparaît alors, au droit de ladite électrode de colonne et d'une électrode de ligne i reliée à la masse une charge électrique -Q et sur ladite électrode de ligne une charge électrique +Q. Sur une électrode de colonne soumise à une tension -V, la charge électrique créée sera inversée ainsi que la charge électrique apparaissant sur chacune des électrodes de ligne.

La somme algébrique $\Sigma Q$ des charges électriques présentes sur la ligne i n'est pas nulle en général. Elle ne l'est que s'il y a autant d'électrodes de colonne soumises à une tension +V que d'électrodes de colonne soumises à une tension -V. A une date t comprise entre

$$\frac{T}{2}$$

et T on aura de manière symétrique une charge $- \Sigma Q$ sur la ligne i.

A la date

$$\frac{T}{2},$$

il y a donc un apport de $-2 \Sigma Q$ charges électriques sur la ligne i. Le matériau d'affichage étant isolant, ces charges sont apportées par l'électrode de ligne i. Le signal $c$ traduit le courant électrique que constitue ce transfert de charges. Ce signal $c$ est en phase avec le signal de colonne majoritaire, c'est-à-dire qu'il est en phase avec le signal $b$ si les signaux de colonne sont en majorité en phase avec le signal $a$ et qu'il est en phase avec le signal $e$ si en majorité les signaux de colonne sont en opposition de phase avec le signal $a$. A titre d'exemple, le signal $c$ représenté sur la figure 2 est en phase avec le signal $b$.

A cause de l'effet capacitif parasite, la tension appliquée au matériau situé à l'intersection d'une ligne non sélectionnée et d'une colonne sur laquelle est appliqué le signal $b$ n'est pas égale au signal $b$, mais au signal $d$ égal à la différence entre les signaux $b$ et $c$. De même, le matériau situé à l'intersection d'une ligne non sélectionnée et dont le signal de colonne est représenté par le signal $e$ est soumis à une tension représentée par le signal $f$ égal à la différence entre les signaux $e$ et $c$, au lieu d'être soumis à une tension représentée par le signal $e$.

Or, on sait que l'excitation du matériau, et donc sa transmission optique varie comme le carré de la tension c'est-à-dire comme l'aire $\underline{D}$, $\underline{F}$, du signal $\underline{d}$, $\underline{f}$.

Cette différence d'aire des signaux $\underline{d}$ et $\underline{f}$ entraîne, du point de vue visuel, une mauvaise homogénéité de l'image ainsi que des traînées sur l'écran.

Selon l'art connu, pour essayer de limiter l'effet de ce couplage, on a été conduit à utiliser des circuits intégrés de commande des lignes d'électrodes ayant un temps d'accès très faible. Cette solution n'est pas sans poser des problèmes puisque pour obtenir un temps d'accès faible, le circuit intégré doit avoir une résistance à l'état passant $R_{on}$ très faible, ce qui nécessite des circuits intégrés à géométrie importante. D'autre part, pour bénéficier pleinement du faible temps d'accès de ces circuits de commande, on doit utiliser des électrodes très conductrices dont le coût de revient est élevé telles que des électrodes en $In_2O_3$ ou $Zn_2O_3$ de 125 nm d'épaisseur présentant une résistance de 40 $\Omega/cm^2$.

L'objectif de l'invention est de supprimer le couplage entre les lignes et les colonnes de commande d'un écran matriciel polychrome. Ce résultat est obtenu d'une part par l'utilisation d'une structure originale de l'écran et d'autre part par un procédé de commande tel que la somme algébrique des signaux de commande des électrodes de colonne soit nulle à chaque instant.

La suppression du couplage entre les lignes et les colonnes permet un relâchement des contraintes sur le temps d'accès des circuits intégrés de commande des lignes de l'écran matriciel. Ceci permet de diminuer la géométrie de ces circuits et d'utiliser des électrodes moins conductrices et donc d'un prix de revient moins élevé.

De manière plus précise, l'invention a pour objet un écran matriciel polychrome commandé électriquement comprenant un matériau dont on peut modifier la caractéristique optique, ce matériau étant intercalé entre une première famille de p lignes de commande parallèles et une seconde famille de q colonnes de commande parallèles, les lignes et les colonnes étant croisées, un point d'image $X_{ij}$ de l'écran étant défini par la région du matériau recouvert par la ligne i, où i est un entier tel que $1 \leq i \leq p$, et par la colonne j, où j est un entier tel que $1 \leq j \leq q$, ledit écran matriciel comprenant également un moyen de commande de ligne et un moyen de commande de colonne pour appliquer des signaux électriques sur les lignes et les colonnes de commande pour provoquer une excitation du matériau propre à modifier sa caractéristique optique. Cet écran se caractérise en ce que chaque ligne de commande comporte m électrodes lignes parallèles, où m est un entier tel que $m \geq 1$, et en ce que chaque colonne de commande comporte n électrodes colonnes transparentes parallèles, où n est un entier pair tel que $n \geq 2$, ledit moyen de commande de colonne délivrant des signaux électriques sur lesdites électrodes de colonne tels que dans chaque colonne de commande les signaux électriques appliqués sur lesdites électrodes de colonne s'annulent par paires, chacune des m.n zones d'un point d'image formées par l'intersection d'une électrode de ligne de la ligne de commande dudit point d'image et d'une électrode colonne de la colonne de commande dudit point d'image étant recouverte d'un filtre coloré.

Dans chaque colonne de commande, on a donc pour chaque électrode de colonne soumise à un signal électrique donné, une électrode de colonne soumise au signal électrique opposé. Il faut bien voir qu'il ne s'agit pas d'un couplage qui, à une électrode donnée d'une colonne de commande associe de manière définitive une autre électrode donnée de la même colonne de commande. Les paires d'électrodes de colonne ne sont pas figées mais sont au contraire modifiées sans cesse en fonction de la couleur désirée du point d'image.

Selon une caractéristique préférée, les signaux électriques délivrés par le moyen de commande de colonne et appliqués aux électrodes des colonnes de commande sont des signaux périodiques. Les signaux électriques appliqués à deux électrodes appariées sont alors en opposition de phase.

Les caractéristiques et avantages de l'invention ressortiront mieux de la description qui va suivre, donnée à titre illustratif mais non limitatif, en référence aux dessins annexés, sur lesquels :
- la figure 1, déjà décrite, illustre la structure d'un écran matriciel polychrome selon l'art connu,
- la figure 2, déjà décrite, est un chronogramme montrant le couplage entre les lignes et les colonnes dans un écran matriciel polychrome selon l'art connu et les défauts visuels induits par ce couplage,
- la figure 3 illustre la structure d'un écran matriciel polychrome selon un premier mode de réalisation de l'invention,
- la figure 4 est un graphique de représentation des couleurs selon la Convention Internationale d'Eclairage,
- la figure 5 illustre la structure d'un écran matriciel polychrome selon un second mode de réalisation de l'invention.

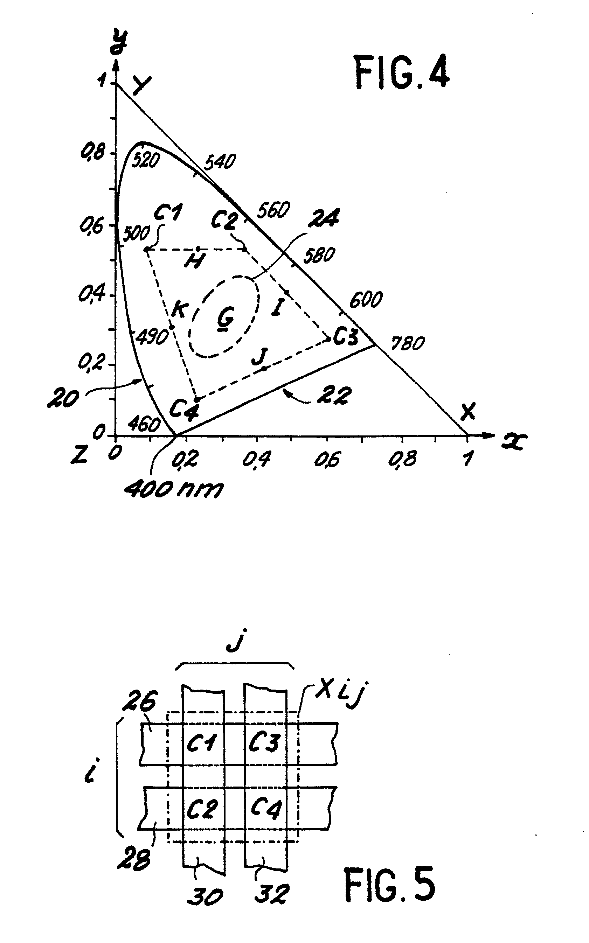

La figure 3 illustre la structure d'un écran matriciel polychrome selon un premier mode de réalisation de l'invention. Dans cet écran, chaque ligne de commande i, où $1 \leq i \leq p$, est constituée d'une unique électrode 10. Par ailleurs, conformément à l'invention, chaque colonne de commande j, où $1 \leq j \leq q$, est constituée d'un nombre pair d'électrodes. Dans l'écran de la figure 3, chaque colonne de commande comprend quatre électrodes parallèles 12, 14, 16 et 18. Ces électrodes sont transparentes et sont recouvertes chacune d'un filtre coloré de couleurs respectives $C_1$, $C_2$, $C_3$ et $C_4$. L'écran comprend également un moyen de commande de ligne 11 et un moyen de commande de colonne 13 pour appliquer des signaux électriques respectivement sur les électrodes de ligne et sur les électrodes de colonne.

Pour supprimer le couplage entre les lignes et les colonnes qui apparaît dans les écrans matriciels polychrome selon l'art connu, on applique par l'inter médiaire du moyen de commande de colonne 13 des signaux électriques aux électrodes de colonne tels que, à l'intérieur de chaque colonne de commande, lesdits signaux s'annulent par paires.

Le procédé de commande de l'écran matriciel polychrome de l'invention consiste à appliquer aux deux électrodes de colonne d'une même paire des signaux de tension opposés. Dans le cas où les signaux de tension sont périodiques, ceci équivaut à déphaser l'un des signaux de 180° avec l'autre. La valeur du déphasage entre l'un de ces signaux et le signal de tension appliqué sur l'électrode de ligne est quelconque.

Le procédé de commande de l'écran matriciel polychrome de l'invention impose des relations entre les signaux de tension appliqués sur les électrodes de colonne. Il est donc clair que les tonalités de couleurs qui correspondent à des signaux ne respectant pas ces relations ne peuvent pas être obtenues.

En particulier, on ne peut pas sélectionner la couleur $C_1$ du filtre coloré de l'électrode 12, car il faudrait appliquer sur cette électrode un signal de tension déphasé de 180° par rapport au signal de tension de ligne et sur chacune des électrodes 14, 16 et 18 un signal de tension en phase avec le signal de ligne. Les électrodes de colonne ne seraient alors plus appariées.

Cette contrainte sur les signaux appliqués sur les électrodes de colonne n'est toutefois pas gênante car, par un choix judicieux des couleurs $C_1$, $C_2$, $C_3$ et $C_4$ des filtres colorés, on peut accéder par combinaison de ces couleurs à la majeure partie des nuances du spectre visible. Ceci apparaît clairement sur la figure 4 qui représente le diagramme chromatique XYZ selon la Convention Internationale de l'Eclairage.

Ce diagramme comprend une courbe 20 dite spectrum locus qui est le lieu des radiations mono - chromatiques. Cette courbe est représentée pour les radiations visibles comprises entre 400 et 780 nanomètres. Cette courbe 20 est fermée par une droite 22 dite des pourpres purs qui représente le lieu des couleurs obtenues par addition du rouge extrême (780 nanomètres) et du violet extrême (400 nanomètres) du spectre visible. Chaque point de la surface fermée définie par la courbe 20 et la droite 22 correspond à une couleur composite particulière. A titre d'exemple, la région 24 centrée sur le point G de coordonnées x=1/3 et y=1/3 représente la couleur blanche.

Sur ce diagramme, on a représenté, selon un exemple de réalisation de l'écran matriciel, les couleurs $C_1$, $C_2$, $C_3$ et $C_4$ des filtres colorés. Ces filtres ont des couleurs composites dont les tonalités sont respectivement le vert, le jaune-vert, le rouge et le violet.

A l'aide de ces quatre filtres colorés, et en commandant l'écran matriciel conformément à l'invention, on peut notamment obtenir les couleurs représentées par les points H, I, J et K de la figure 4. Les tonalités de ces couleurs composites sont respectivement le vert-jaunâtre, le jaune-orangé, le rosé-pourpré et le bleu-vert. Ces couleurs sont obtenues en appliquant sur les électrodes de colonne les signaux de tension indiqués dans le tableau suivant.

## TABLEAU

| Couleur de l'électrode de colonne | Phase entre le signal de ligne et le signal appliqué sur l'électrode de colonne | | | |
|---|---|---|---|---|
| $C_1$ | 180° | 180° | 0° | 0° |
| $C_2$ | 180° | 0° | 180° | 0° |
| $C_3$ | 0° | 0° | 180° | 180° |
| $C_4$ | 0° | 180° | 0° | 180° |
| Couleur composite résultante | H | I | J | K |

Un blanc moyen (région 24 de la figure 4) peut également être obtenu en appliquant sur les électrodes de colonne des signaux de tension déphasés de ±90° par rapport au signal de tension de ligne. Il suffit d'adresser deux électrodes de colonne quelconques avec un déphasage de +90° sur le signal de tension de ligne et les deux autres électrodes de colonne avec un déphasage de -90°.

L'utilisation d'autres déphasages entre les signaux de tension de colonne et le signal de tension de lignes permet l'obtention d'autres couleurs.

On a décrit en référence à la figure 3 un écran matriciel polychrome selon l'invention dont chaque point d'image $X_{ij}$ est constitué par l'intersection d'une électrode de ligne avec quatre électrodes de colonne. Bien entendu, ceci ne saurait constituer une limitation de l'invention qui concerne aussi les écrans matriciels polychromes dont le nombre d'électrodes de colonne, pour chaque point d'image, est égal à 2, 6, 208, etc...

L'invention comprend également les écrans matriciels polychromes dont les électrodes de colonne sont commandées conformément au procédé de l'invention et dans lesquelles à chaque point d'image est associée une pluralité d'électrodes de ligne. Un exemple de réalisation d'un tel écran matriciel polychrome est représenté sur la figure 5.

Sur cette figure, chaque point d'image $X_{ij}$ est défini par l'intersection entre la ligne de commande i comprenant deux électrodes de ligne 26, 28"et la colonne de commande j comprenant deux électrodes de colonne 30, 32. Les intersections entre ces électrodes de ligne et ces électrodes de colonne définissent des régions où l'on peut modifier la caractéristique optique du matériau. Des filtres colorés $C_1$, $C_2$, $C_3$ et $C_4$ sont disposés sur les électrodes de colonne au droit de chacune de ces régions. Des moyens de commande de ligne et de colonne analogues à ceux représentés et décrits en référence aux figures 1 et 2 complètent l'écran matriciel dont un point d'image est représenté sur la figure 5. Ces moyens n'ont pas été représentéssur cette figure.

Le procédé de commande de cet écran matriciel polychrome est le suivant. De manière classique, les électrodes de ligne sont sélectionnées l'une après l'autre, les électrodes de ligne non sélectionnées étant reliées à la masse. La commande des électrodes de colonne se fait conformément à l'invention en appliquant un signal de tension sur l'une des deux électrodes de la colonne et en appliquant un signal de tension déphasé de 180° sur l'autre électrode de colonne.

Le tableau suivant résume le déphasage à appliquer aux signaux des électrodes de colonne 30, 32 par rapport aux signaux des électrodes de ligne 26, 28 pour obtenir les couleurs composites H, I, J et K de la figure 4.

## TABLEAU

| Référence de l'électrode de ligne sélectionnée | Phase des électrodes de colonne 30 et 32 | | | |
|---|---|---|---|---|
| 26 | 180° et 0° | 0° et 180° | 180° et 0° | 0° et 180° |
| 28 | 180° et 0° | 0° et 180° | 0° et 180° | 180° et 0° |
| Couleur composite résultante | H | K | I | J |

Conformément à l'invention, un blanc moyen est obtenu en adressant l'une des deux colonnes avec un déphasage de +90° par rapport au signal de l'électrode de ligne sélectionnée et l'autre électrode de colonne avec un déphasage de -90° par rapport à cette électrode de ligne.

L'utilisation de déphasages différents entre les électrodes de colonne et les électrodes de ligne permet l'obtention d'autres couleurs.

La structure et le procédé de commande de l'écran matriciel polychrome de l'invention permettent de relâcher les contraintes de temps d'accès qui existent sur les écrans selon l'art connu.

Le couplage entre les lignes et les colonnes étant supprimé, il n'est plus nécessaire d'avoir un faible temps d'accès. On peut donc utiliser des circuits d'adressage plus lent qui sont plus petits et on peut employer des électrodes faiblement conductrices à coût de revient faible telles que des électrodes en $In_2O_3$ ou $Zn_2O_3$ de 25 nm d'épaisseur présentant une résistance de 200 $\Omega/cm^2$.

## Revendications

1. Ecran matriciel polychrome commandé électriquement comprenant un matériau dont on peut modifier la caractéristique optique, ce matériau étant intercalé entre une première famille de p lignes de commande parallèles et une seconde famille de q colonnes de commande parallèles, les lignes et les colonnes étant croisées, un point d'image $X_{ij}$ de l'écran étant défini par la région du matériau recouvert par la ligne i, où i est un entier tel que $1 \leqslant i \leqslant p$, et par la colonne j, où j est un entier tel que $1 \leqslant j \leqslant q$, ledit écran matriciel étant caractérisé en ce que chaque ligne de commande comporte m électrodes de lignes parallèles (10, 26, 28), où m est un entier tel que $m \geqslant 1$, et en ce que chaque colonne de commande comporte n électrodes de colonnes transparentes parallèles (12, 14, 16, 18, 30, 32), où n est un entier pair tel que $n \geqslant 2$, ledit écran comprenant également un moyen de commande de ligne (11) et un moyen de commande de colonne (13) pour appliquer respectivement sur les électrodes de ligne et les électrodes de colonne des signaux électriques provoquant une excitation du matériau propre à modifier sa caractéristique optique, ledit moyen de commande de colonne délivrant des signaux électriques tels que dans chaque colonne de commande les signaux électriques appliqués aux électrodes de colonne s'annulent par paires, chacune des m.n zones d'un point d'image formées par l'intersection d'une électrode de ligne de la ligne de commande dudit point d'image et d'une électrode de colonne de la colonne de commande dudit point d'image étant recouverte d'un filtre coloré ($C_1$, $C_2$, $C_3$ et $C_4$).

2. Ecran matriciel polychrome selon la revendication 1, caractérisé en ce que les signaux électriques appliqués aux électrodes des colonnes de commande sont des signaux périodiques.

## Patentansprüche

1. Vielfarbiger Matrixanzeigeschirm, der elektrisch angesteuert wird, bestehend aus einem Material, von dem man die optischen Eigenschaften ändern kann und das zwischen einer ersten Familie aus p parallelen Steuerzeilen und einer zweiten Familie aus q parallelen Steuerspalten angeordnet ist, wobei die Zeilen und Spalten gekreuzt sind, ein Bildpunkt $X_{ij}$ des Schirms durch den Materialbereich definiert ist, der von der Zeile i und durch die Spalte j bedeckt ist, wobei i eine ganze Zahl gemäß $1 \leqslant i \leqslant p$ und j eine ganze Zahl gemäß $1 \leqslant i \leqslant q$ ist, dadurch gekennzeichnet, daß jede Steuerzeile m parallele Zeilenelektroden (10, 26, 28) aufweist, wobei m eine ganze Zahl gemäß $m \geqslant 1$ ist, und jede Spalte aus n transparenten parallelen Spaltenelektroden (12, 14, 16, 18, 30, 32) besteht, wobei n eine ganze gerade Zahl gemäß $n \geqslant 2$ ist, wobei der genannte Schirm auch eine Zeilensteuereinrichtung (11) und eine Spaltensteuereinrichtung (13) enthält, um an die Zeilenelektroden bzw. an die Spaltenelektroden elektrische Signale anzulegen, die eine Erregung des Materials hervorrufen, die dazu geeignet ist, seine optischen Eigenschaften zu verändern, wobei die Spaltensteuereinrichtung elektrische Signale derart liefert, daß in jeder Steuerspalte die an die Spaltenelektroden angelegten elektrischen Signale sich paarweise aufheben, wobei jede der m.n Bildpunktzonen, die durch Überschneidung einer Zeilenelektrode der Steuerzeile des Bildpunktes mit einer Spaltenelektrode der Steuerspalte des Bildpunktes gebildet werden, von einem Farbfilter ($C_1$, $C_2$, $C_3$ und $C_4$) bedeckt ist.

2. Mehrfarbiger Matrixanzeigeschirm nach Anspruch 1, dadurch gekennzeichnet, daß die an die Spaltensteuerelektroden angelegten elektrischen Signale periodische Signale sind.

**Claims**

1. Electrically controlled polychrome matrix screen having a material whose optical characteristic can be modified, said material being inserted between a first group of p parallel control rows and a second group of q parallel control columns, the rows and columns intersecting, an image point $X_{ij}$ of the screen being defined by the region of the material covered by row i, in which i is an integer such that $1 \leq i \leq p$ and by the column j in which j is an integer such that $1 \leq i \leq q$, characterized in that each control row has m parallel row electrodes (10, 26, 28), in which m is an integer such that $m \geq 1$ and in that each control column has n parallel transparent column electrodes (12, 14, 16, 18, 30, 32), in which n is an even integer such that $n \geq 2$, said screen also having a row control means (11) and a column control means (13) for respectively applying to the row electrodes and column electrodes electrical signals causing an excitation of the material suitable for modifying its optical characteristic, said column control means supplying electrical signals such that in each control column the electrical signals applied to the column electrodes cancel one another out in pairs, each of the m.n zones of an image point formed by the intersection of a row electrode of the control row of said image point and a column electrode of the control column of said image point being covered with a colour filter ($C_1$, $C_2$, $C_3$, $C_4$).

2. Polychrome matrix screen according to claim 1, characterized in that the electric signals applied to the column control electrodes are periodic signals.

FIG. 1

FIG. 3

EP 0 176 384 B1

FIG.2

FIG.4

FIG.5